# EUROPEAN PATENT SPECIFICATION

(11) **EP 3 015 349 B1**
(45) Date of publication and mention of the grant of the patent: **01.03.2017**
(21) Application number: 15175630.1
(22) Date of filing: 07.07.2015
(51) Int. Cl.: B62J 17/02, B62J 99/00, B60K 35/00

(54) **VEHICLE**
FAHRZEUG
VÉHICULE

(30) Priority: 31.10.2014 JP 2014223776
(43) Date of publication of application: 04.05.2016
(73) Proprietor: Yamaha Hatsudoki Kabushiki Kaisha, Iwata-shi, Shizuoka 438-8501 (JP)
(72) Inventor: UEDA, Takumi, Iwata-shi, Shizuoka 438-8501 (JP)
(74) Representative: Grünecker Patent- und Rechtsanwälte PartG mbB

(56) References cited:
- EP-A1- 2 226 241
- EP-A2- 0 869 052
- CN-A- 102 173 303
- JP-A- H 058 777
- JP-A- 2008 105 665
- JP-U- S6 439 189
- US-A1- 2014 177 200

## Description

The present invention relates to a vehicle capable of traveling with the body at an angle according to the preamble of independent claim 1. Such a vehicle can be taken from the prior art document JP 2008-105665 A.

There are known vehicles having a front wheel, a steering apparatus for steering the front wheel, a headlight unit that is supported by the steering apparatus, a front cowl to which the headlight unit is attached, and a gauge that is supported by the steering apparatus. With a vehicle such as this, there is a known configuration in which the front cowl, the headlight unit, and the gauge are supported by the steering apparatus using a metal stay.

Recent years have seen a need for making vehicle bodies more lightweight in an effort to improve fuel economy. One way to reduce the weight of a body is to change the above-mentioned metal stay to a synthetic resin stay.

JP 2008-105665 A discloses a configuration in which a front cowl, a headlight unit, and a gauge are supported via a synthetic resin stay. A steering apparatus includes a handlebar, an upper bracket that is attached to the handlebar, a steering shaft that is attached to the upper bracket and is supported by a body frame, a damping apparatus that is attached to the upper bracket and to which the front wheel is attached, and an under bracket that is disposed below the upper bracket and to which the steering shaft and the damping apparatus are attached. The synthetic resin stay has a stay main part and a gauge support. The stay main part and the gauge support are molded integrally as a single member. The stay main part is attached to the upper bracket and the under bracket of the steering apparatus. The gauge is attached to the gauge support. The gauge support also serves as a gauge cover. The front cowl is attached to the stay main part and the gauge support. The headlight unit is attached to the front cowl.

A synthetic resin stay can be formed lighter than a metal stay. On the other hand, a synthetic resin stay ends up being larger than a metal stay to ensure adequate strength of the stay. Making the synthetic resin stay larger also makes it more prone to bending. Consequently, supporting the front cowl, the headlight unit, and the gauge on the steering apparatus could sometimes be a challenging job.

It is an object of the present invention to provide a vehicle with which the job of supporting a front cowl, a headlight unit, a gauge, and a gauge cover on a steering apparatus can be carried out easily.

According to the present invention said object is solved by a vehicle having the features of independent claim 1. Preferred embodiments are laid down in the dependent claims.

The vehicle pertaining to an embodiment is a vehicle capable of traveling with the body at an angle, said vehicle comprising a body frame, a steering apparatus that is attached to the body frame so as to be rotatable around a steering shaft, a front wheel that is attached to the steering apparatus, a cowl stay that is molded form a synthetic resin and is attached to the steering apparatus, a front cowl that is attached to the cowl stay, and a headlight unit that is attached to the front cowl. The width of the cowl stay in the left and right direction is greater than the width of the headlight unit in the left and right direction in a front view of the vehicle. The vehicle further comprises a gauge stay that is a separate member from the cowl stay and is supported by the steering apparatus, a gauge that is attached to the gauge stay and displays information related to travel, and a gauge cover that is a separate member from the gauge stay, surrounds at least the front part of the gauge, and is supported by the front cowl.

The inventors of the vehicle pertaining to an embodiment studied synthetic resin stays in an effort to identify what exactly makes the job harder when a front cowl, a headlight unit, and a gauge are supported on a steering apparatus.

The synthetic resin stay disclosed in JP 2008-105665 A has a structure in which the stay main part and the gauge support are integrated, and any weight exerted on the gauge support is borne by the stay main part. Also, the structure is such that the gauge support and the front cowl are bolted on.

Study into this matter has revealed that when a gauge is attached to the gauge support of a synthetic resin stay, the weight of the gauge causes the end of the gauge support to bend down with respect to the stay main part. If the gauge support bends with respect to the stay main part, the positions where the gauge support and the front cowl are bolted on will no longer line up. Therefore, when the gauge support and the front cowl are fastened, they have to be bolted on while positioning the gauge support and the front cowl. That is, when the weight of the gauge causes the end of the gauge support to bend down with respect to the stay main part, this is what makes the job harder in supporting a front cowl, a headlight unit, and a gauge on a steering apparatus.

Also, the synthetic resin stay disclosed in JP 2008-105665 A has a configuration in which the gauge support is touching the front cowl. If the weight of the gauge causes the gauge support to bend downward with respect to the stay main part, this tends to create a gap between the front cowl and the gauge support (which is also the gauge cover). There needs to be the proper spacing between the gauge support and the front cowl, and this make it difficult to design the gauge support and the front cowl.

With the vehicle pertaining to an embodiment, the gauge is supported on the steering apparatus by a gauge stay. The gauge stay is a separate member from the gauge cover surrounding the front part of the gauge, or the synthetic resin cowl stay to which the front cowl is attached. Therefore, it is less likely that the weight of the gauge will cause the cowl stay and the gauge cover to bend, so the job of supporting the front cowl, the headlight unit, the gauge, and the gauge cover on the steering apparatus can be performed more easily.

Also, since the gauge cover is supported by the front cowl, it will be less likely that the relative positions of the gauge cover and the front cowl will shift when the steering apparatus is rotated.

With the vehicle pertaining to an embodiment, the gauge cover is a separate member from the cowl stay.

With the vehicle pertaining to an embodiment, since the gauge cover is a separate member from the cowl stay, it is less likely that the weight of the gauge will be exerted on the cowl stay via the gauge cover. Also, the gauge is supported on the steering apparatus by the gauge stay. Therefore, it is less likely that the cowl stay and the gauge cover will bend under the weight of the gauge, so the job of supporting the front cowl, the headlight unit, the gauge, and the gauge cover on the steering apparatus can be performed more easily.

With the vehicle pertaining to an embodiment, the gauge stay is supported by the steering apparatus and is attached to the cowl stay.

With the vehicle pertaining to an embodiment, the cowl stay can be attached to the steering apparatus after the gauge stay is attached to the cowl stay. Therefore, the job of assembling the cowl stay and the gauge stay on the steering apparatus is easier. Also, since the gauge stay is supported by the steering apparatus, it is less likely that the weight of the gauge will be exerted on the cowl stay. Therefore, it is less likely that the cowl stay and the gauge cover will bend under the weight of the gauge, so the job of supporting the front cowl, the headlight unit, the gauge, and the gauge cover on the steering apparatus can be performed more easily.

With the vehicle pertaining to an embodiment, the gauge cover is attached to the gauge.

With the vehicle pertaining to an embodiment, the gauge cover is attached to the gauge, and is thereby supported by the gauge stay via the gauge. Since the gauge cover is supported on the steering apparatus via the gauge and the gauge stay, it is less likely that the gauge cover will bend under the weight of the gauge. Therefore, the job of supporting the front cowl, the headlight unit, the gauge, and the gauge cover on the steering apparatus can be performed more easily.

With the vehicle pertaining to an embodiment, the gauge cover is attached so as to be capable of movement in the forward and backward direction and the left and right direction with respect to the gauge stay in a plan view of the vehicle.

With the vehicle pertaining to an embodiment, the gauge cover can be supported by the front cowl while the gauge cover is moved in the forward and backward direction and the left and right direction with respect to the gauge stay. Therefore, the job of supporting the front cowl, the headlight unit, the gauge, and the gauge cover on the steering apparatus can be performed more easily.

With the vehicle pertaining to an embodiment, the gauge stay is disposed on the upper part of the cowl stay, and has a base that extends to the left and right in a plan view of the vehicle, and support arms that are disposed on the left and right parts of the base. First plug-in parts that extend downward in a side view of the vehicle are provided to the rear ends of the support arms. The steering apparatus has first openings into which the first plug-in parts can be inserted. The gauge stay is supported by the steering apparatus when the first plug-in parts of the gauge stay are inserted from above into the first openings.

With the vehicle pertaining to an embodiment, the gauge stay is supported on the steering apparatus when the first plug-in parts of the gauge stay are plugged into the first openings of the steering apparatus. Therefore, the job of supporting the front cowl, the headlight unit, the gauge, and the gauge cover on the steering apparatus can be performed more easily.

With the vehicle pertaining to an embodiment, the gauge has a second plug-in part that extends forward. The front cowl has a second opening into which the second plug-in part can be inserted. The second plug-in part of the gauge is plugged into the second opening of the front cowl, so that the gauge and the gauge cover are supported by the front cowl.

With the vehicle pertaining to an embodiment, the gauge and the gauge cover are supported on the front cowl when the second plug-in part of the gauge is plugged into the second opening of the front cowl. Therefore, the job of supporting the front cowl, the headlight unit, the gauge, and the gauge cover on the steering apparatus can be performed more easily.

The vehicle pertaining to an embodiment further has a drive source that generates a drive force for propelling the vehicle, a main switch that is attached to the steering apparatus and starts and stops the drive source. The main switch has an operation face that is operated to start and stop the drive source. The gauge cover has an opening that exposes the operation face of the main switch, and a switch cover that covers the area around the operation face.

With the vehicle pertaining to an embodiment, the area around the operation face of the main switch can be covered by supporting the gauge cover on the front cowl. Therefore, there is no need to provide a separate cover for the area around the main switch.

### BRIEF DESCRIPTION OF THE DRAWINGS

FIG. 1 is a left side view of the overall configuration of a motorcycle pertaining to an embodiment;
FIG. 2 is a front view in which part of the motorcycle is not shown;
FIG. 3 is a plan view in which part of the motorcycle is not shown;
FIG. 4 is an oblique view of a steering apparatus;
FIG. 5 is an oblique view of a cowl stay;
FIG. 6 is an oblique view of a gauge cover;
FIG. 7 is an oblique view of a state in which a gauge has been attached to a gauge cover;
FIG. 8 is an oblique view of a gauge stay;
FIG. 9 is a plan view of a gauge stay;
FIG. 10 is an oblique view of a state in which a headlight unit has been attached to a first front cover;
FIG. 11 is an oblique view of a state in which a steering apparatus, a cowl stay, a gauge cover, and a front cowl are assembled;
FIG. 12 is an oblique view of a state in which a cowl stay, a gauge stay, and a gauge cover have been assembled;
FIG. 13 is a side-face cross section in which the portion ahead of the steering apparatus is cut along the center line in the vehicle width direction; and
FIG. 14 is a front view of a state in which a front cowl has been attached to a cowl stay.

### DESCRIPTION OF THE EMBODIMENTS

The vehicle pertaining to an embodiment will now be described through reference to the drawings. In this embodiment, a motorcycle 100 will be described as an example of a vehicle. Components that are the same or equivalent in the drawings will be numbered the same, and those components will not be described more than once. The dimensions of the constituent members in the drawings do not faithfully represent the dimensions of the actual constituent members or the dimensional proportions of the various constituent members.

### Overall Configuration

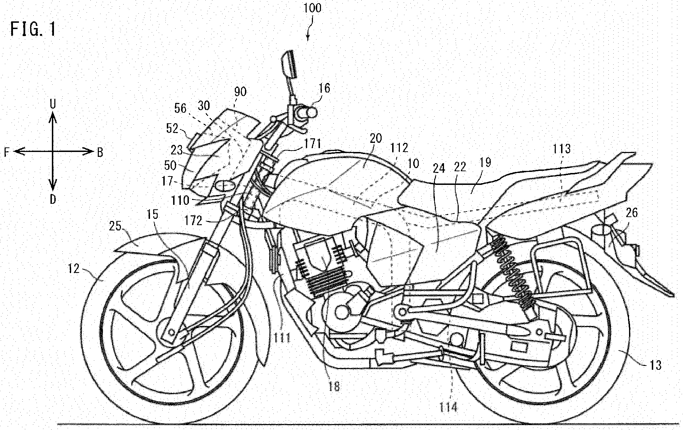

FIG. 1 is a left side view of the overall configuration of the motorcycle 100 pertaining to an embodiment. In the drawing, the arrow F indicates the front direction of the motorcycle 100, and the arrow B indicates the back direction of the motorcycle 100. The arrow R indicates the right direction of the motorcycle 100, and the arrow L indicates the left direction of the motorcycle 100. The left and right direction of the motorcycle 100 shall be the left and right direction as seen from a rider who is on the motorcycle 100. The arrow U indicates the up direction of the motorcycle 100, and the arrow D indicates the down direction of the motorcycle 100.

The motorcycle 100 comprises a body frame 10, a front wheel 12, a rear wheel 13, a power unit 18, a fuel tank 20, and a body cover 22. The motorcycle 100 is able to travel with its body at an angle.

The body frame 10 includes a head pipe 110, a front frame 111, a main frame 112, a rear frame 113, and a rear arm 114. The head pipe 110 is disposed at the front part of the body frame 10. The front frame 111 is connected to the head pipe 110, and extends downward and rearward. The main frame 112 is connected to the head pipe 110, and extends rearward. The rear part of the main frame 112 curves and extends downward. The rear frame 113 is connected to the curved portion of the main frame 112. The rear frame 113 extends rearward and upward. The rear arm 114 is rotatably supported at the lower part of the main frame 112. The rear wheel 13 is rotatably supported at the rear end of the rear arm 114.

A steering shaft 17 is rotatably inserted in the head pipe 110. An upper bracket 171 is connected to the upper part of the steering shaft 17. An under bracket 172 is connected to the lower part of the steering shaft 17. A handlebar 16 is disposed at the upper part of the upper bracket 171. The upper bracket 171 and the under bracket 172 support a front fork 15. The front wheel 12 is rotatably supported by the front fork 15. When the handlebar 16 is turned in the left and right direction, the front wheel 12 also turns in the left and right direction.

The power unit 18 is supported by the front frame 111 and the main frame 112. The power unit 18 generates a drive force for propelling the motorcycle 100. The drive force of the power unit 18 is transmitted to the rear wheel 13.

The fuel tank 20 is attached to the main frame 112 and the rear frame 113. A seat 19 is disposed to the rear of the fuel tank 20. The seat 19 is attached to the rear frame 113.

The body cover 22 covers the body frame 10. The body cover 22 includes a front cowl 23, a side cover 24, a front fender 25, and a rear fender 26.

The front cowl 23 is disposed ahead of the head pipe 110. A headlight unit 56 is disposed in the front cowl 23. The headlight unit 56 comprises a headlight 50 and an auxiliary light 52. A cowl stay 30 and a gauge cover 90 are disposed at the rear part of the front cowl 23. The front cowl 23 is attached to the upper bracket 171 and the under bracket 172 via the cowl stay 30.

The side cover 24 is disposed below the seat 19. The front fender 25 is disposed above the front wheel 12. The rear fender 26 is disposed above the rear wheel 13.

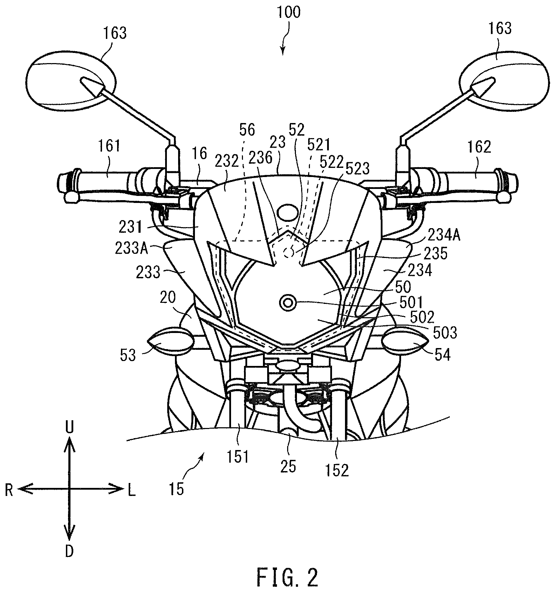

FIG. 2 is a front view in which part of the motorcycle is not shown. As shown in FIG. 2, a right shaft 151 that constitutes part of the front fork 15 is disposed to the right of center in the vehicle width direction. A left shaft 152 that constitutes part of the front fork 15 is disposed to the left of center in the vehicle width direction. The front cowl 23 is disposed above the right shaft 151 and the left shaft 152.

The headlight unit 56, a right turn signal light 53, and a left turn signal light 54 are attached to the front cowl 23. The front cowl 23 has a first front cover 231 and a second front cover 232. A headlight unit opening 235 that exposes the headlight 50 and the auxiliary light 52 is formed in the first front cover 231. The second front cover 232 is disposed at the upper part of the first front cover 231.

The first front cover 231 is disposed in the center in the vehicle width direction. The first front cover 231 is provided with a right protrusion 233 that sticks out to the right in front view, and a left protrusion 234 that sticks out to the left in front view. In front view, the right end 233A of the right protrusion 233 is disposed to the right of the fuel tank 20. In front view, the left end 234A of the left protrusion 234 is disposed to the left of the fuel tank 20. The width in the left and right direction from the right end 233A to the left end 234A is the widest part of the first front cover 231 in the left and right direction. In front view, the width of the first front cover 231 in the left and right direction is greater than the length in the up and down direction. In front view, the headlight unit opening 235 is formed from the center in the up and down direction of the first front cover 231 to the lower part. The width of the headlight unit opening 235 in the left and right direction is greatest at the upper part, decreasing toward the lower part.

The second front cover 232 is disposed in the center in the vehicle width direction. The second front cover 232 is disposed at the upper part of the first front cover 231. The lower end of the second front cover 232 is contiguous with the peripheral edge of the headlight unit opening 235. An opening 236 that surrounds the auxiliary light 52 in front view is formed in the lower part of the second front cover 232. The opening 236 is formed in the center in the vehicle width direction. The opening 236 is formed in a substantially pentagonal shape to match the shape of the auxiliary light 52. The second front cover 232 is molded from a semitransparent resin that transmits light.

The headlight unit 56 comprises the headlight 50 and the auxiliary light 52. The headlight 50 illuminates the area ahead of the motorcycle 100. The headlight 50 includes a headlight bulb 501, a headlight reflector 502, and a headlight cover 503.

The headlight bulb 501 is disposed in the center of the headlight 50 in the vehicle width direction. The headlight bulb 501 is a halogen bulb, for example.

The headlight reflector 502 reflects light emitted from the headlight bulb 501. The headlight reflector 502 is disposed around the outside of the headlight bulb 501.

The headlight cover 503 covers the front of the headlight bulb 501 and the a reflector 322. The headlight cover 503 transmits light emitted by the headlight bulb 501.

The auxiliary light 52 is disposed above the headlight 50. The auxiliary light 52 is formed integrally and contiguous with the headlight 50. The width of the auxiliary light 52 in the left and right direction is less than the width of the headlight 50 in the left and right direction. The auxiliary light 52 includes an auxiliary light bulb 521, an auxiliary light reflector 522, and an auxiliary light cover 523.

The auxiliary light bulb 521 is disposed in the center of the auxiliary light 52 in the vehicle width direction. The auxiliary light bulb 521 is a halogen bulb with a lower output than that of the headlight bulb 501.

The auxiliary light reflector 522 reflects light emitted by the auxiliary light bulb 521. The auxiliary light reflector 522 is formed integrally and contiguous with the headlight reflector 502.

The auxiliary light cover 523 covers the front of the auxiliary light bulb 521 and the auxiliary light reflector 522. The auxiliary light cover 523 is formed integrally and contiguous with the headlight cover 503. The auxiliary light cover 523 transmits light emitted by the auxiliary light bulb 521.

The right turn signal light 53 is disposed to the right of the headlight 50 in the vehicle width direction. The right turn signal light 53 is substantially the same height as the lower end of the headlight 50 in the up and down direction.

The left turn signal light 54 is disposed to the left of the headlight 50 in the vehicle width direction. The left turn signal light 54 is substantially the same height as the lower end of the headlight 50 in the up and down direction.

The upper part of the front cowl 23 is superposed with the handlebar 16 in front view. The handlebar 16 extends in the left and right direction. A right grip 161 is attached to the right end of the handlebar 16. A left grip 162 is attached to the left end of the handlebar 16. A mirror 163 is attached to the handlebar 16.

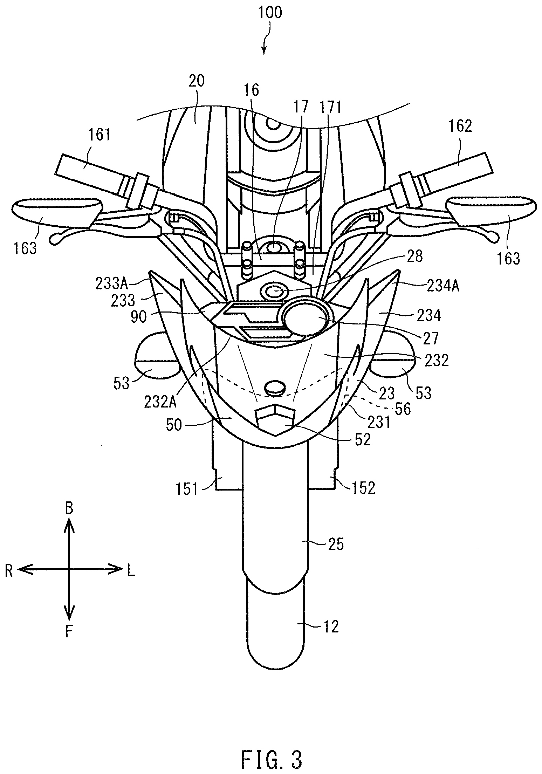

FIG. 3 is a plan view in which part of the motorcycle 100 is not shown. As shown in FIG. 3, the first front cover 231 is curved so that the center in the left and right direction sticks out forward. The right end 233A of the right protrusion 233 and the left end 234A of the left protrusion 234 are positioned at the rear end of the first front cover 231 in plan view. The headlight unit 56 is disposed at the front part of the first front cover 231.

The second front cover 232 is disposed to the rear of the front end of the first front cover 231 in plan view. The rear end 232A of the second front cover 232 is curved so as to stick out forward in plan view.

The gauge cover 90 is disposed to the rear of the second front cover 232 in plan view. A gauge 27 and a main switch 28 are disposed on the gauge cover 90. The gauge 27 displays information related to travel, such as the vehicle speed or the amount of fuel remaining, for example. The main switch 28 is disposed to the rear of the gauge 27 in plan view. The main switch 28 is operated to start or stop the power unit 18.

The steering shaft 17 and the upper bracket 171 are disposed to the rear of the main switch 28 in plan view. The handlebar 16 is disposed on the upper bracket 171. The fuel tank 20 is disposed to the rear of the handlebar 16 in plan view.

### Steering apparatus

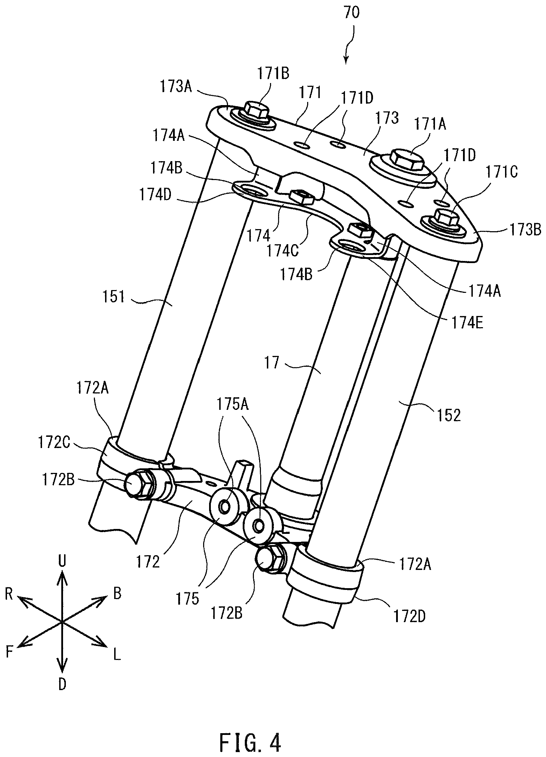

FIG. 4 is an oblique view of a steering apparatus 70. As shown in FIG. 4, the steering apparatus 70 has the steering shaft 17, the upper bracket 171, the under bracket 172, the right shaft 151, and the left shaft 152.

The steering shaft 17 extends in the up and down direction. The steering shaft 17 is rotatably supported by the head pipe 110.

The upper bracket 171 has an upper bracket main body 173 and a gauge stay support 174. The upper bracket 171 is made of metal.

The upper bracket main body 173 extends in the left and right direction. The right part 173A and left part 173B of the upper bracket main body 173 are curved forward beyond the center part in the left and right direction. The upper part of the steering shaft 17 is attached by a bolt 171A to the center lower part of the upper bracket main body 173. The upper part of the right shaft 151 is attached by a bolt 171 B to the right part 173A of the upper bracket main body 173. The right shaft 151 extends in the up and down direction, parallel to the steering shaft 17. The upper part of the left shaft 152 is attached by a bolt 171C to the left part 173B of the upper bracket main body 173. The left shaft 152 extends in the up and down direction, parallel to the steering shaft 17. A handlebar attachment hole 171 D for attaching the handlebar 16 is formed in the upper bracket main body 173.

The gauge stay support 174 is disposed below and ahead of the upper bracket main body 173. The gauge stay support 174 is formed integrally and contiguous with the upper bracket main body 173. The gauge stay support 174 is linked by an upper bracket link 174A to the upper bracket main body 173. The gauge stay support 174 extends in the left and right direction. The width of the gauge stay support 174 in the left and right direction is less than the width of the upper bracket main body 173 in the left and right direction. The front part 174C of the gauge stay support 174 curves rearward at its center. A gauge stay support hole 174B is formed in each of the right part 174D and left part 174E of the gauge stay support 174. The gauge stay support holes 174B open in the up and down direction. The gauge stay support holes 174B correspond to the first openings of the present teaching.

The under bracket 172 extends in the left and right direction. The right part 172C and left part 172D of the under bracket 172 curve forward beyond the center part in the left and right direction. The lower part of the steering shaft 17 is attached to the center part of the under bracket 172. A front fork attachment hole 172A is formed in the right part 172C of the under bracket 172. The right shaft 151 passes through the front fork attachment hole 172A. The right shaft 151 is fixed to the under bracket 172 by fastening the front fork attachment holes 172A with a bolt 172B. The left shaft 152 is fixed to the left part 172D of the under bracket 172 by the same configuration as with the right part 172C. Cowl stay attachment components 175 that are disposed in left and right symmetry are formed in the center part of the under bracket 172. Cowl stay attachment holes 175A are formed in the cowl stay attachment components 175. The cowl stay attachment holes 175A open forward.

### Cowl stay

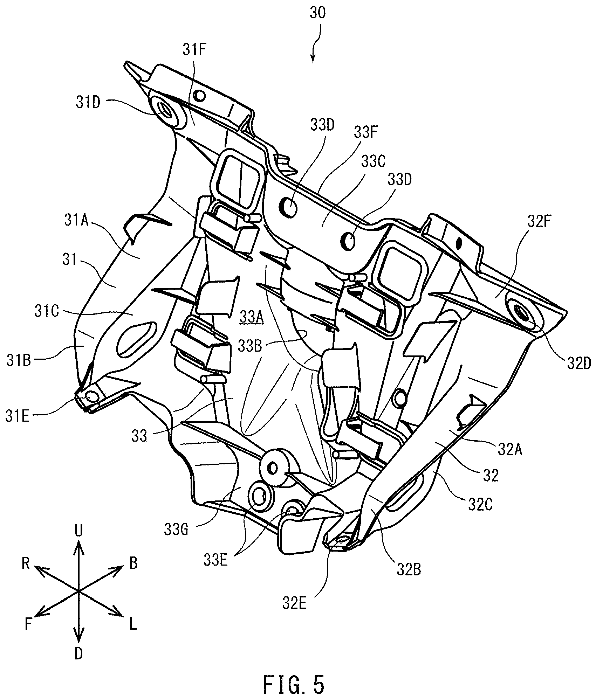

FIG. 5 is an oblique view of the cowl stay 30. The cowl stay 30 is molded from a synthetic resin. As shown in FIG. 5, the cowl stay 30 has a right wall 31, a left wall 32, and a center wall 33. The right wall 31, the left wall 32, and the center wall 33 extend in the up and down direction. The center wall 33 is flanked by the right wall 31 and the left wall 32. The right wall 31 and the left wall 32 curve rearward. The center part 31A and lower part 31 B in the up and down direction of the right wall 31 are connected by a right connector 31C to the center wall 33. The center part 32A and lower part 32B in the up and down direction of the left wall 32 are connected by a left connector 32C to the center wall 33. The center part 33A of the center wall 33 in the up and down direction is formed to the rear of the right wall 31 and the left wall 32. Therefore, the center part 33A of the center wall 33 and the right connector 31C and left connector 32C form a space that opens forward and is recessed rearward. A center opening 33B is formed in the center part 33A of the center wall 33.

An upper front cowl attachment hole 31 D is formed in the upper part 31 F of the right wall 31. An upper front cowl attachment hole 32D is formed in the upper part 32F of the left wall 32. A gauge stay attachment component 33C is formed on the upper part 33F of the center wall 33. The gauge stay attachment component 33C sticks out forward beyond the upper front cowl attachment holes 31 D and 32D. Gauge stay attachment holes 33D are formed at positions in left and right symmetry in the gauge stay attachment component 33C.

A lower front cowl attachment hole 31 E is formed in the lower part 31 B of the right wall 31. A lower front cowl attachment hole 32E is formed in the lower part 32B of the left wall 32. The lower front cowl attachment holes 31 E and 32E open in the up and down direction. Under bracket attachment holes 33E are formed at positions in left and right symmetry in the lower part 33G of the center wall 33.

### Gauge cover

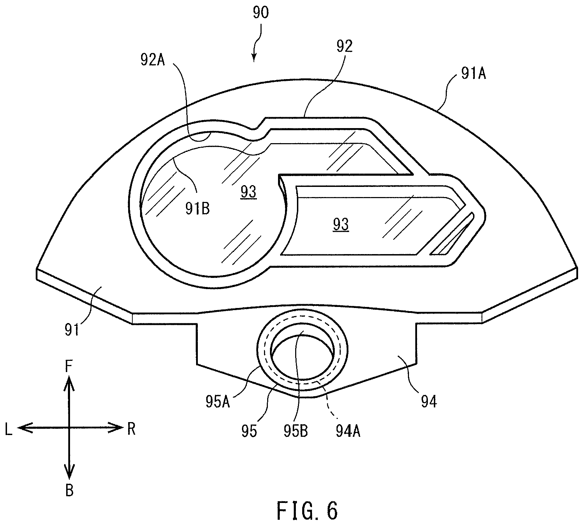

FIG. 6 is an oblique view of the gauge cover 90. The gauge cover 90 has a gauge cover main body 91, a gauge cover protrusion 92, an inner cover 93, a switch panel 94, and a switch cover 95. The gauge cover 90 is molded from a synthetic resin.

The gauge cover main body 91 extends in the left and right direction. The front edge 91A of the gauge cover main body 91 curves so as to protrude forward. A gauge attachment hole 91 B is formed in the gauge cover main body 91.

The gauge cover protrusion 92 is disposed on the upper part of the gauge cover main body 91. The gauge cover protrusion 92 protrudes upward with respect to the gauge cover main body 91. The gauge cover protrusion 92 surrounds the gauge attachment hole 91 B. A space is formed on the inside of the gauge cover protrusion 92. A gauge opening 92A is formed in the upper part of the gauge cover protrusion 92.

The inner cover 93 is attached to the gauge opening 92A. The inner cover 93 is transparent.

The switch panel 94 is formed on the rear part of the gauge cover main body 91. The switch panel 94 is formed contiguous with the gauge cover main body 91. A switch opening 94A that exposes the main switch 28 is formed in the switch panel 94. The diameter of the switch opening 94A is larger than the diameter of the main switch 28.

The switch cover 95 has a switch cover main body 95A and a switch cover plug-in part 95B. The switch cover 95 is a separate member from the switch panel 94. The switch cover main body 95A is disposed above the switch opening 94A. The switch cover plug-in part 95B is plugged into the switch opening 94A. The switch cover 95 is plugged into the switch opening 94A after the main switch 28 is disposed in the switch opening 94A.

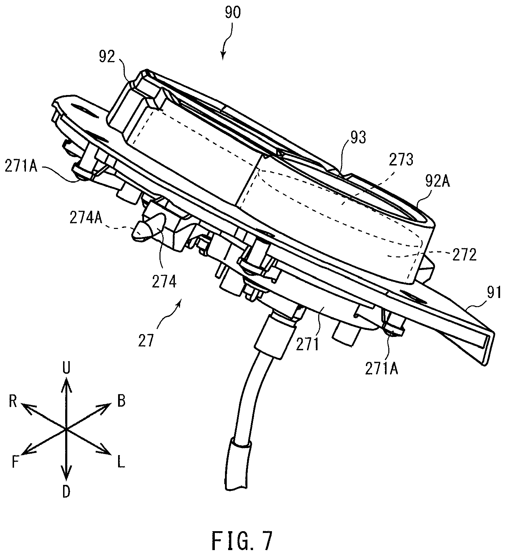

FIG. 7 is an oblique view of a state in which the gauge 27 has been attached to the gauge cover 90. As shown in FIG. 7, the gauge 27 has a gauge base 271, a gauge display component 272, a gauge display face 273, and a front cowl plug-in part 274. The gauge base 271 extends in the left and right direction. The gauge display component 272 protrudes upward with respect to the gauge base 271. The gauge display face 273 is formed on the upper face of the gauge display component 272. The gauge display face 273 is the portion that displays information related to travel. The front cowl plug-in part 274 is formed at the front part of the gauge base 271. The front cowl plug-in part 274 is formed in the center in the left and right direction, and extends forward. A bulging part 274A is formed in the front part of the front cowl plug-in part 274. The front cowl plug-in part 274 corresponds to the second plug-in part of the present teaching.

As shown in FIG. 7, in a state in which the gauge 27 has been attached to the gauge cover 90, the gauge display component 272 is plugged into the gauge attachment hole 91 B from below. The gauge base 271 is attached by screws 271A to the lower part of the gauge cover main body 91. The gauge display component 272 is housed in a space on the inside of the gauge cover protrusion 92. The gauge display face 273 faces upward. The gauge display face 273 can be viewed through the inner cover 93. The gauge cover protrusion 92 here completely surrounds the gauge display component 272, but may instead surround just a part of the gauge display component 272.

### Gauge stay

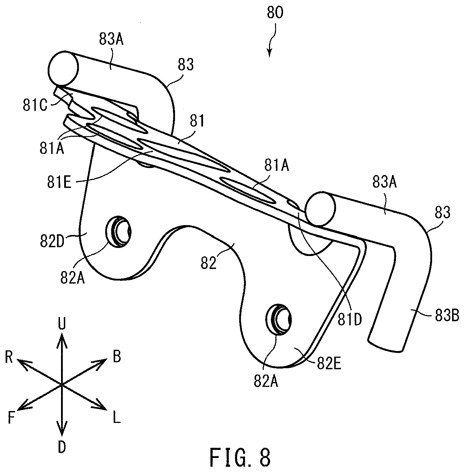

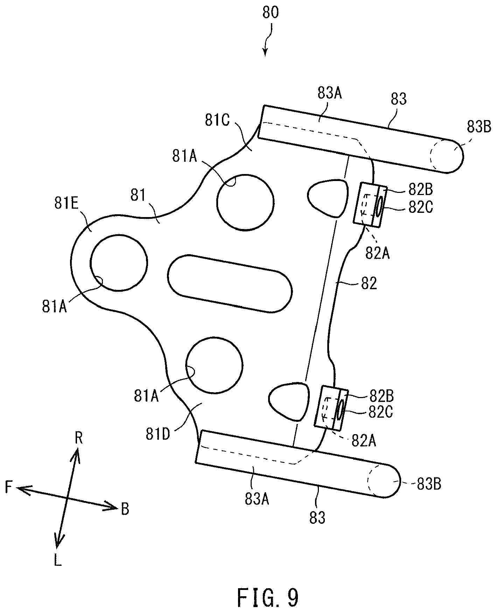

FIG. 8 is an oblique view of a gauge stay 80. FIG. 9 is a plan view of the gauge stay 80. As shown in FIG. 8, the gauge stay 80 has a gauge support 81, a gauge stay attachment component 82, and upper bracket plug-in parts 83. The gauge stay 80 is formed from metal, for example. The gauge stay 80 is a separate member from the cowl stay 30 and the gauge cover 90.

The gauge support 81 extends in the left and right direction. The gauge support 81 corresponds to the base in the present teaching. A gauge attachment hole 81A is formed in each of the right part 81C, the left part 81 D, and the center part 81 E of the gauge support 81. The center gauge attachment hole 81A is formed ahead of the left and right gauge attachment holes 81A.

The gauge stay attachment component 82 is contiguous with the rear part of the gauge support 81. The gauge stay attachment component 82 extends downward. A cowl stay attachment hole 82A is formed in each of the right part 82D and the left part 82E of the gauge stay attachment component 82.

The upper bracket plug-in parts 83 each have an attachment component 83A and a plug-in part 83B. The upper bracket plug-in parts 83 correspond to the support arms of the present teaching. The attachment component 83A is disposed on the right part 81C and the left part 81 D of the gauge support 81. The attachment component 83A is fixed by welding, for example, to the upper part of the gauge support 81.

Each plug-in part 83B is contiguous with the rear part of the attachment component 83A. The plug-in parts 83B extend downward. The plug-in parts 83B are disposed to the rear of the gauge stay attachment component 82. The plug-in parts 83B correspond to the first plug-in parts of the present teaching.

As shown in FIG. 9, the center part 81 E of the gauge support 81 in the left and right direction protrudes forward. The gauge attachment hole 81A is formed in the center part 81 E. Threaded groove formation components 82B are attached to the gauge stay attachment component 82. Threaded grooves 82C that are contiguous with the cowl stay attachment holes 82A are formed on the inside of the threaded groove formation components 82B.

### Assembly of Components

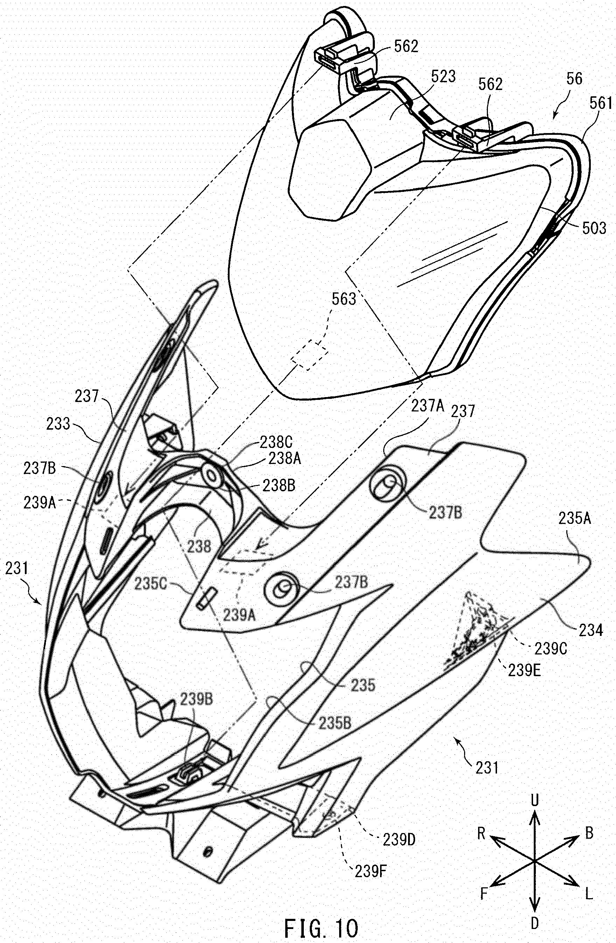

FIG. 10 is an oblique view of a state in which the headlight unit 56 is attached to the first front cover 231. As shown in FIG. 10, the first front cover 231 has the headlight unit opening 235, second front cover attachment components 237, and a gauge cover support 238.

The headlight unit opening 235 is formed in the front part of the first front cover 231. The headlight unit opening 235 has a headlight cover opening 235B and an auxiliary light cover opening 235C. The headlight cover opening 235B exposes the headlight cover 503 in a state in which the headlight unit 56 is attached to the first front cover 231. The auxiliary light cover opening 235C exposes the auxiliary light cover 523 in a state in which the headlight unit 56 is attached to the first front cover 231.

The second front cover attachment components 237 are formed in the upper part of the first front cover 231. The second front cover attachment components 237 are disposed in left and right symmetry with respect to the center in the left and right direction. Curved parts 237A are formed between the right second front cover attachment component 237 and the left second front cover attachment component 237. Second front cover attachment holes 237B are formed in the second front cover attachment components 237.

The gauge cover support 238 is formed at the upper part of the first front cover 231. The gauge cover support 238 is disposed between the right second front cover attachment component 237 and the left second front cover attachment component 237. The gauge cover support 238 has a support wall 238A and a gauge cover support hole 238B.

The support wall 238A extends in the left and right direction. The rear part of the support wall 238A faces rearward.

The gauge cover support hole 238B is formed in the support wall 238A. The gauge cover support hole 238B opens in the forward and backward direction. A grommet 238C is attached to the gauge cover support hole 238B. The grommet 238C is formed from an elastic member, and has a hole formed in its center. The hole in the grommet 238C corresponds to the second opening of the present teaching.

Front cover-side upper supports 239A, a front cover-side lower support 239B, cowl stay upper supports 239C, and cowl stay lower supports 239D are provided on the inside of the first front cover 231.

The front cover-side upper supports 239A are disposed to the left and right sides of the gauge cover support 238. The front cover-side upper supports 239A support the upper part of the headlight unit 56.

The front cover-side lower support 239B is disposed at the lower part of the first front cover 231 on the inside of the first front cover 231. The front cover-side lower support 239B is disposed in the center of the first front cover 231 in the left and right direction. The front cover-side lower support 239B supports the lower part of the headlight unit 56.

The cowl stay upper supports 239C are disposed on the inside of the right protrusion 233 and the left protrusion 234. An attachment hole 239E is formed in each of the left and right cowl stay upper supports 239C. The attachment holes 239E open in the forward and backward direction.

The cowl stay lower supports 239D are disposed on the inside of and at the lower part of the first front cover 231. The cowl stay lower supports 239D are disposed to the left and right sides of the front cover-side lower support 239B. An attachment hole 239F is formed in each of the left and right cowl stay lower supports 239D. The attachment holes 239F open in the up and down direction.

The headlight unit 56 has a base member 561. The base member 561 is disposed to the rear of the headlight cover 503 and the auxiliary light cover 523. The base member 561 has headlight unit-side upper supports 562 and a headlight unit-side lower support 563.

The headlight unit-side upper supports 562 are provided to the upper part of the base member 561. The headlight unit-side upper supports 562 are disposed in left and right symmetry with respect to the center in the left and right direction.

The headlight unit-side lower support 563 is provided to the lower part of the base member 561. The headlight unit-side lower support 563 is disposed in the center in the left and right direction.

When the headlight unit 56 is installed in the first front cover 231, the headlight cover 503 is disposed in the headlight cover opening 235B, and the auxiliary light cover 523 is disposed in the auxiliary light cover opening 235C. The headlight unit-side upper supports 562 are then supported on the front cover-side upper supports 239A, and the headlight unit-side lower support 563 is supported on the front cover-side lower support 239B.

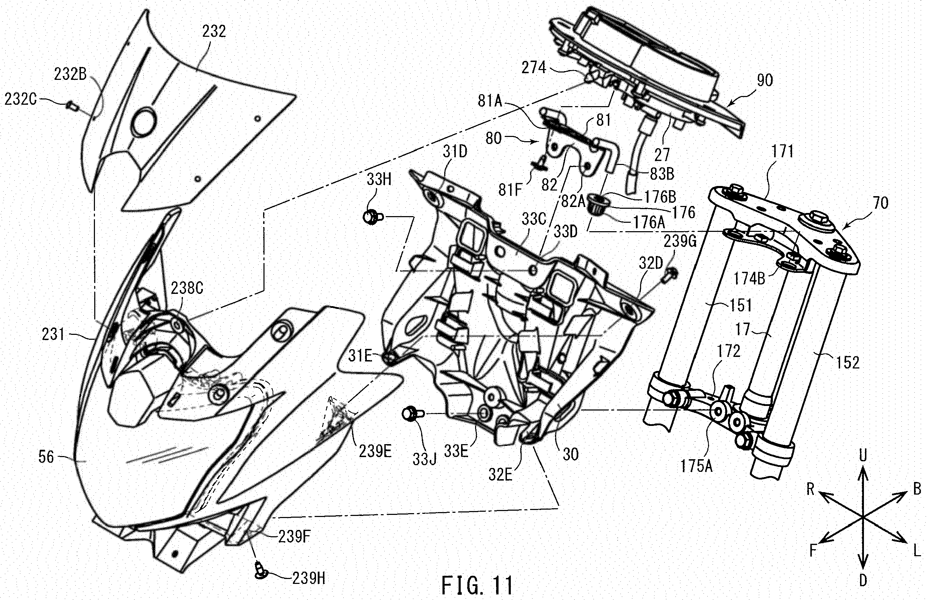

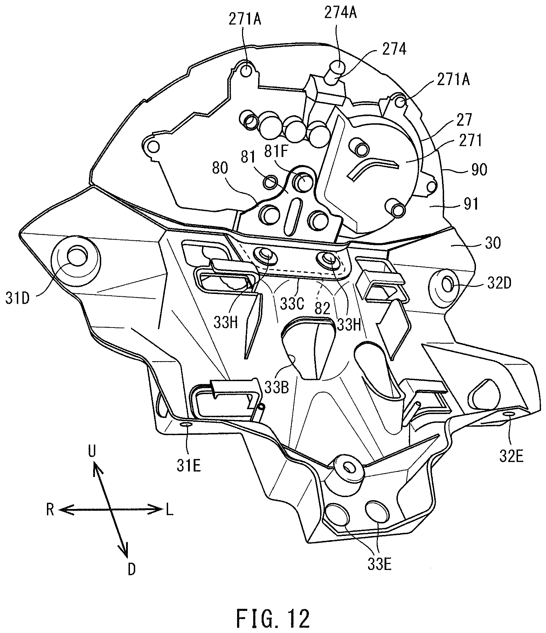

FIG. 11 is an oblique view of a state in which the steering apparatus 70, the cowl stay 30, the gauge cover 90, and the front cowl 23 are assembled. FIG. 12 is an oblique view of a state in which the cowl stay 30, the gauge stay 80, and the gauge cover 90 have been assembled. As shown in FIG. 11, we will assume that the gauge 27 is attached to the gauge cover 90. The gauge stay 80 is attached to the lower part of the gauge 27. Bolts 81 F are put into the gauge attachment holes 81A formed in the gauge support 81 and attachment holes (not shown) formed in the lower part of the gauge 27, and the gauge stay 80 is attached to the gauge 27. The gauge stay 80 is preferably able to move in the left and right direction and in the forward and backward direction with respect to the gauge 27. For example, if the diameter of the gauge attachment holes 81A is set to be larger than the diameter of the bolts 81 F, then movement will be possible in the left and right direction and the forward and backward direction with respect to the 27.

The gauge stay 80 is also attached to the cowl stay 30. The gauge stay attachment component 82 is attached to the rear face of the gauge stay attachment component 33C. Bolts 33H are put into the cowl stay attachment holes 82A formed in the gauge stay attachment component 82 and into the gauge stay attachment holes 33D formed in the gauge stay attachment component 33C to attach the gauge stay 80 to the cowl stay 30.

A state in which the cowl stay 30, the gauge stay 80, and the gauge cover 90 have been assembled will now be described through reference to FIG. 12. FIG. 12 is a view from below of the cowl stay 30, the gauge stay 80, and the gauge cover 90 in an assembled state. The cowl stay 30 and the gauge cover 90 are attached view the gauge stay 80. Since the gauge support 81 and the gauge stay attachment component 82 are contiguous at an angle, the cowl stay 30 and the gauge cover 90 are also attached at an angle. The cowl stay 30 extends in the up and down direction, and the gauge cover 90 extends in the forward and backward direction.

As discussed above, the gauge stay 80 is able to move in the left and right direction and in the forward and backward direction with respect to the gauge 27. The gauge 27 is attached to the gauge cover 90, and the gauge stay 80 is attached to the cowl stay 30. Therefore, the gauge 27 and the gauge cover 90 are able to move in the left and right direction and in the forward and backward direction with respect to the cowl stay 30.

Returning to FIG. 11, the assembly of the cowl stay 30 and the steering apparatus 70 will be described. First, the configuration in which the upper part of the cowl stay 30 is supported by the upper bracket 171 will be described. Bushings 176 are inserted into the gauge stay support holes 174B of the upper bracket 171. The bushings 176 are formed form an elastic member. The bushings 176 each have a plug-in part 176A and a plug-in hole 176B. The plug-in parts 176A have a diameter that allows them to be inserted into the gauge stay support holes 174B. The plug-in holes 176B have a diameter that allows the plug-in parts 83B of the gauge stay 80 to be inserted. The plug-in holes 176B open upward. After the bushings 176 are inserted into the gauge stay support holes 174B, the plug-in parts 83B of the gauge stay 80 are inserted into the plug-in holes 176B from above to support the gauge stay 80 on the upper bracket 171.

Next, the lower part of the cowl stay 30 is attached to the under bracket 172. Bolts 33J are attached to the under bracket attachment holes 33E formed in the cowl stay 30 and the cowl stay attachment holes 175A formed in the under bracket 172, to attach the cowl stay 30 to the under bracket 172.

In FIG. 11, the first front cover 231 and the headlight unit 56 are assembled. The second front cover 232 is attached to the upper part of the first front cover 231. Attachment holes 232b are formed in the second front cover 232. Bolts 232C are attached to the attachment holes 232b of the second front cover 232 and the second front cover attachment holes 237B formed in the second front cover attachment components 237, to attach the second front cover 232 to the upper part of the first front cover 231.

Next, the cowl stay 30 and the gauge cover 90 are attached to the first front cover 231. Bolts 239G are attached to upper front cowl attachment holes 31 D and 32D of the cowl stay 30 and to the attachment holes 239E of the first front cover 231 to attach the upper part of the cowl stay 30 to the upper part of the first front cover 231. Bolts 239H are attached to lower front cowl attachment holes 31 E and 32E of the cowl stay 30 and to the attachment holes 239F of the first front cover 231 to attach the lower part of the cowl stay 30 to the lower part of the first front cover 231. The front cowl plug-in part 274 of the gauge 27 is plugged into the grommet 238C of the first front cover 231. When the front cowl plug-in part 274 is plugged into the grommet 238C, the gauge 27 and the gauge cover 90 are supported by the first front cover 231.

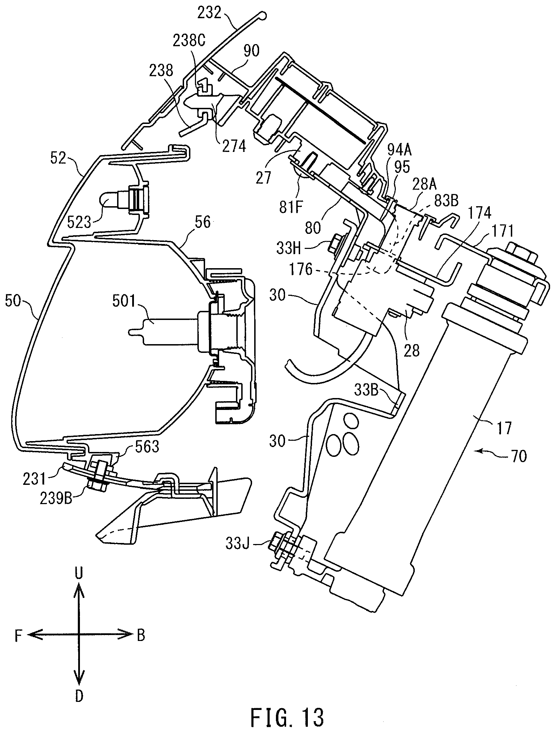

FIG. 13 is a side-face cross section in which the portion ahead of the steering apparatus 70 is cut along the center line in the vehicle width direction. As shown in FIG. 13, the headlight unit 56 is attached to the first front cover 231. The headlight unit-side lower support 563 of the headlight unit 56 is supported by the front cover-side lower support 239B. The second front cover 232 is attached to the upper part of the first front cover 231. The gauge 27 is attached to the gauge cover 90. The gauge 27 and the gauge stay 80 are attached with a bolt 81 F. The cowl stay 30 and the gauge stay 80 are attached with bolts 33H. The plug-in parts 83B of the gauge stay 80 are plugged into the bushings 176 fitted into the gauge stay support 174. The main switch 28 is supported by the gauge stay support 174. An operation face 28A of the main switch 28 is formed at the upper part. The operation face 28A of the main switch 28 is exposed from the switch opening 94A of the gauge cover 90. The switch cover 95 is disposed around the operation face 28A. The cowl stay 30 and the under bracket 172 are attached with bolts 33J. The front cowl plug-in part 274 of the gauge 27 is plugged into the grommet 238C of the first front cover 231.

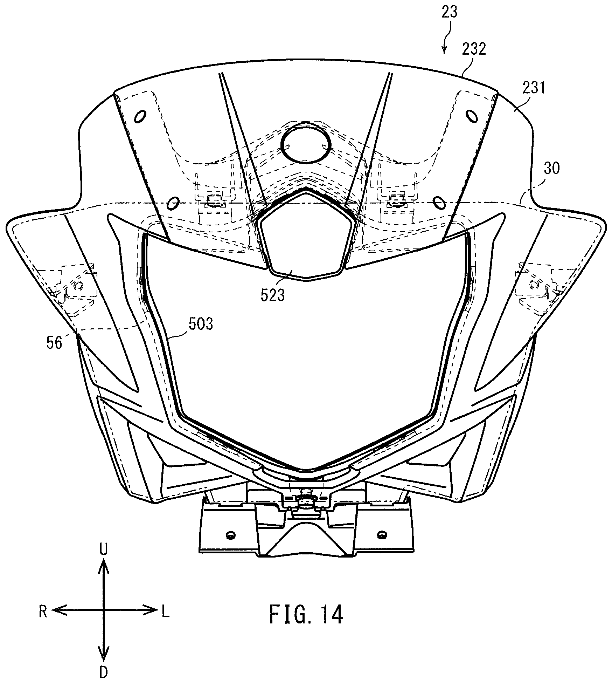

FIG. 14 is a front view of a state in which the front cowl 23 has been attached to the cowl stay 30. In FIG. 14, the outer shape of the cowl stay 30 in front view is indicated by a two-dot chain line. In front view, the width of the cowl stay 30 in the left and right direction is greater than the width of the headlight unit 56 in the left and right direction. The length of the cowl stay 30 in the up and down direction is greater than the length of the headlight unit 56 in the up and down direction.

### Effect of Embodiment 1

With the motorcycle 100 pertaining to this embodiment, the gauge 27 is supported on the steering apparatus 70 by the gauge stay 80. The gauge stay 80 is a separate member from the cowl stay 30, which is made of synthetic resin and to which the front cowl 23 is attached, and from the gauge cover 90, which surrounds the front part of the gauge 27. Accordingly, it is less likely that the cowl stay 30 and the gauge cover 90 will bend under the weight of the gauge 27, so the job of supporting the front cowl 23, the headlight unit 56, the gauge 27, and the gauge cover 90 on the steering apparatus 70 can be performed more easily. Also, since the gauge cover 90 is supported by the front cowl 23, it is less likely that there will be deviation in the relative positions of the gauge cover 90 and the front cowl 23 when the steering apparatus 70 is turned.

With the motorcycle 100 pertaining to this embodiment, since the gauge cover 90 is a separate member from the cowl stay 30, it is less likely that the weight of the gauge 27 will be exerted on the cowl stay 30 via the gauge cover 90. Also, the gauge 27 is supported on the steering apparatus 70 by the gauge stay 80. Accordingly, it is less likely that the cowl stay 30 and the gauge cover 90 will bend under the weight of the gauge 27, so the job of supporting the front cowl 23, the headlight unit 56, the gauge 27, and the gauge cover 90 on the steering apparatus 70 can be performed more easily.

With the motorcycle 100 pertaining to this embodiment, the gauge stay 80 is supported by the steering apparatus 70 and is attached to the cowl stay 30. The cowl stay 30 can be attached to the steering apparatus 70 after the gauge stay 80 is attached to the cowl stay 30. Therefore, the job of attaching the cowl stay 30 and the gauge stay 80 to the steering apparatus 70 is easier. Also, since the gauge stay 80 is supported by the steering apparatus 70, it is less likely that the weight of the gauge 27 will be exerted on the cowl stay 30. Accordingly, it is less likely that the cowl stay 30 and the gauge cover 90 will bend under the weight of the gauge 27, so the job of supporting the front cowl 23, the headlight unit 56, the gauge 27, and the gauge cover 90 on the steering apparatus 70 can be performed more easily.

With the motorcycle 100 pertaining to this embodiment, the gauge cover 90 is attached to the gauge 27 and thereby supported on the gauge stay 80 via the gauge 27. Since the gauge cover 90 is supported on the steering apparatus 70 via the gauge 27 and the gauge stay 80, it is less likely to bend under the weight of the gauge 27. Accordingly, the job of supporting the front cowl 23, the headlight unit 56, the gauge 27, and the gauge cover 90 on the steering apparatus 70 can be performed more easily.

With the motorcycle 100 pertaining to this embodiment, the gauge cover 90 is attached so as to be capable of movement in the forward and backward direction and in the left and right direction with respect to the gauge stay 80. Therefore, the gauge cover 90 can be supported on the front cowl 23 while being moved in the forward and backward direction and in the left and right direction with respect to the gauge stay 80. Accordingly, the job of supporting the front cowl 23, the headlight unit 56, the gauge 27, and the gauge cover 90 on the steering apparatus 70 can be performed more easily.

With the motorcycle 100 pertaining to this embodiment, the gauge stay 80 is supported on the steering apparatus 70 by plugging the plug-in parts 83B of the gauge stay 80 into the gauge stay support holes 174B of the steering apparatus 70. Therefore, the job of supporting the front cowl 23, the headlight unit 56, the gauge 27, and the gauge cover 90 on the steering apparatus 70 can be performed more easily.

With the motorcycle 100 pertaining to this embodiment, the gauge 27 and the gauge cover 90 are supported on the front cowl 23 by plugging the front cowl plug-in part 274 of the gauge 27 into the grommet 238C of the front cowl 23. Therefore, the job of supporting the front cowl 23, the headlight unit 56, the gauge 27, and the gauge cover 90 on the steering apparatus 70 can be performed more easily.

With the motorcycle 100 pertaining to this embodiment, the gauge cover 90 has the switch cover 95 and the switch opening 94A that exposes the operation face 28A of the main switch 28. The area around the operation face 28A of the main switch 28 can be covered by supporting the gauge cover 90 on the front cowl 23. Therefore, there is no need to provide a separate cover for the area around the main switch 28.

### Other Embodiments

An embodiment was described above as an example of working the present teaching.

### REFERENCE SIGNS LIST

- 100: motorcycle
- 10: body frame
- 23: front cowl
- 27: gauge
- 30: cowl stay
- 56: headlight unit
- 70: steering apparatus
- 80: gauge stay
- 90: gauge cover

## Claims

1. A vehicle capable of traveling with the body at an angle, said vehicle comprising:
a body frame (10);
a steering apparatus (70) that is attached to the body frame (10) so as to be rotatable around a steering shaft (17);
a front wheel (12) that is attached to the steering apparatus (70);
a cowl stay (30) that is molded form a synthetic resin and is attached to the steering apparatus (70);
a front cowl (23) that is attached to the cowl stay (30); and
a headlight unit (56) that is attached to the front cowl (23),
wherein a width of the cowl stay (30) in a left and right direction of the vehicle is greater than a width of the headlight unit (56) in the left and right direction of the vehicle in a front view of the vehicle, and
said vehicle further comprises:
a gauge stay (80) that is a separate member from the cowl stay (30);
a gauge (27) that is attached to the gauge stay (80) and configured to display information related to travel; and
a gauge cover (90) that is a separate member from the gauge stay (80), surrounds at least a front part of the gauge (27), and is supported by the front cowl (23), wherein the gauge stay (80) is supported by the steering apparatus (70) and wherein the gauge cover (90) is attached to the gauge (27), **characterized in that** the gauge cover (90) is attached so as to be capable of movement in the forward and backward direction of the vehicle and the left and right direction of the vehicle with respect to the gauge stay (80) in a plan view of the vehicle.

2. A vehicle according to claim 1, **characterized in that** the gauge cover (90) is a separate member from the cowl stay (30).

3. A vehicle according to claim 1 or 2, **characterized in that** the gauge stay (80) is supported by the steering apparatus (70) and is attached to the cowl stay (30).

4. A vehicle according to any of claims 1 to 3, **characterized in that** the gauge stay (80) is disposed on an upper part of the cowl stay (30), and has a base that extends to a left and right direction of the vehicle in a plan view of the vehicle, and support arms (83) that are disposed on left and right parts of the base,
first plug-in parts (83B) that extend downward in a side view of the vehicle are provided to rear ends of the support arms (83),
the steering apparatus (70) has first openings (174B) into which the first plug-in parts (83B) can be inserted, and
the gauge stay (80) is supported by the steering apparatus (70) when the first plug-in parts (83B) of the gauge stay (80) are inserted from above into the first openings (174B).

5. A vehicle according to any of claims 1 to 4, **characterized in that** the gauge (27) has a second plug-in part (274) that extend in forward direction of the vehicle,
the front cowl (23) has a second opening into which the second plug-in part (274) can be inserted, and
the second plug-in part (274) of the gauge (27) is plugged into the second opening of the front cowl (23), so that the gauge (27) and the gauge cover (90) are supported by the front cowl (23).

6. A vehicle according to any of claims 1 to 5, **characterized by**
a drive source (18) configured to generate a drive force for propelling the vehicle; and
a main switch (28) that is attached to the steering apparatus (70) and configured to start and stop the drive source (18),
wherein the main switch (28) has a operation face (28A) that is configured to be operated to start and stop the drive source (18), and
the gauge cover (90) has an opening that exposes the operation face (28A) of the main switch (28), and a switch cover (95) that covers the area around the operation face (28A).

## Patentansprüche

1. Ein Fahrzeug, das in der Lage ist, mit einem Körper unter einem Winkel zu fahren, dieses Fahrzeug umfasst:
einen Körperrahmen (10);
einen Lenkapparat (70), der an dem Körperrahmen (10) angebracht ist, so dass dieser um eine Lenkwelle (17) drehbar ist;
ein Vorderrad (12), das an dem Lenkapparat (70) angebracht ist;
eine Abdeckungsstütze (30), die aus synthetischem Harz geformt ist und an dem Lenkapparat (70) angebracht ist;
eine vordere Abdeckung (23), die an der Abdeckungsstütze (30) angebracht ist; und
eine Hauptscheinwerfereinheit (56), die an der vorderen Abdeckung (23) angebracht ist,
wobei eine Breite der Abdeckungsstütze (30) in einer Links- und Rechts-Richtung des Fahrzeugs größer ist als eine Breite der Hauptscheinwerfereinheit (56) in der Links- und Rechts-Richtung des Fahrzeugs in einer Vorder-Ansicht des Fahrzeugs, und
dieses Fahrzeug weiter umfasst:
eine Instrumentenstütze (80), die ein getrenntes Element von der Abdeckungsstütze (30) ist;
ein Instrument (27), das an der Instrumentenstütze (80) angebracht ist und konfiguriert ist, um Informationen bezüglich der Fahrt anzuzeigen; und
eine Instrumentenabdeckung (90), die ein separates Element von der Instrumentenstütze 80 ist, umgibt zumindest einen vorderen Teil des Instruments (27) und ist durch die vordere Abdeckung (23) gelagert, wobei die Instrumentenstütze (80) durch den Lenkapparat (70) gelagert ist und wobei die Instrumentenabdeckung (90) an dem Instrument (27) angebracht ist, **dadurch gekennzeichnet, dass** die Instrumentenabdeckung (90) angebracht ist, sodass diese in der Lage zur Bewegung in der Vorder- und Rück-Richtung des Fahrzeugs ist und der Links- und Rechts-Richtung des Fahrzeugs mit Bezug auf die Instrumentenstütze (80) in einer Draufsicht des Fahrzeugs.

2. Ein Fahrzeug gemäß Anspruch 1, **dadurch gekennzeichnet, dass die** Instrumentenabdeckung (90) ein separates Element von der Abdeckungsstütze (30) ist.

3. Ein Fahrzeug gemäß Anspruch 1 oder 2, **dadurch gekennzeichnet, dass** die Instrumentenstütze (80) durch den Lenkapparat (70) gelagert ist und an der Abdeckungsstütze (30) angebracht ist.

4. Ein Fahrzeug gemäß irgendeinem der Ansprüche 1 bis 3, **dadurch gekennzeichnet, dass** die Instrumentenstütze (80) an einem oberen Teil der Abdeckungsstütze (30) positioniert ist, und eine Basis hat, die sich in eine Links- und Rechts-Richtung des Fahrzeugs, in einer Draufsicht des Fahrzeugs, erstreckt und Lagerarme (83) hat, die an linken und rechten Teilen der Basis positioniert ist,
erste Einsteckteile (83B), die sich nach unten in einer Seiten-Ansicht des Fahrzeugs erstrecken, sind an hinteren Enden der Lagerarme (83) vorgesehen,
der Lenkapparat (70) hat erste Öffnungen (174B), in welche die ersten Einsteckteile (83B) eingesteckt werden können, und
die Instrumentenstütze (80) ist durch den Lenkapparat (70) gelagert, wenn die ersten Einsteckteile (83B) der Instrumentenstütze (80) von oben in die ersten Öffnungen (174B) eingesetzt sind.

5. Ein Fahrzeug gemäß irgendeinem der Ansprüche 1 bis 4, **dadurch gekennzeichnet, dass** das Instrument (27) einen zweiten Einsteckteil (274) hat, der sich in eine Vorder-Richtung des Fahrzeugs erstreckt,
die vordere Abdeckung (23) hat eine zweite Öffnung, in welche der zweite Einsteckteil (274) eingesteckt werden kann, und
der zweite Einsteckteil (274) des Instruments (27) ist in die zweite Öffnung der vorderen Abdeckung (23) eingesteckt, sodass das Instrument (27) und die Instrumentenabdeckung (90) durch die vordere Abdeckung (23) gelagert sind.

6. Ein Fahrzeug gemäß irgendeinem der Ansprüche 1 bis 5, **gekennzeichnet durch** eine Antriebsquelle (18) die konfiguriert ist, um eine Antriebskraft zum Antreiben des Fahrzeugs zu erzeugen; und einen Hauptschalter (28), der an dem Lenkapparat (70) angebracht ist und konfiguriert ist, um die Antriebsquelle (18) zu starten und zu stoppen,
wobei der Hauptschalter (28) eine Betätigungsfläche (28A) hat, die konfiguriert ist betätigt zu werden, um die Antriebsquelle (18) zu starten und zu stoppen, und
die Instrumentenabdeckung (90) hat eine Öffnung, welche die Betätigungsfläche (28A) des Hauptschalters (28) freilegt und eine Schalterabdeckung (95), welche den Bereich um die Betätigungsfläche (28A) abdeckt.

## Revendications

1. Véhicule pouvant rouler châssis incliné, ledit véhicule comprenant :
un châssis de carrosserie (10) ;
un dispositif de direction (70) qui est fixé sur le châssis de carrosserie (10) de manière à pouvoir tourner autour d'un arbre de direction (17) ;
une roue avant (12) qui est reliée au dispositif de direction (70) ;
un support de carénage (30) qui est moulé dans une résine synthétique et est fixé sur le dispositif de direction (70) ;
un carénage avant (23) qui est fixé sur le support de carénage (30) ; et
une unité de phare avant (56) qui est fixée sur le carénage avant (23),
une largeur du support de carénage (30) dans les directions gauche et droite du véhicule étant supérieure à une largeur de l'unité de phare avant (56) dans les directions gauche et droite du véhicule vu de devant, et
ledit véhicule comprenant, en outre :
un support de compteur (80) qui est un élément distinct du support de carénage (30) ;
un compteur (27) qui est fixé sur le support de compteur (80) et conçu pour afficher des informations relatives au trajet ; et
un couvercle de compteur (90) qui est un élément distinct du support de compteur (80), entoure au moins une partie antérieure du compteur (27) et est supporté par le carénage avant (23),
le support de compteur (80) étant supporté par le dispositif de direction (70) et le couvercle de compteur (90) étant fixé sur le compteur (27),
**caractérisé en ce que**
le couvercle de compteur (90) est fixé de manière à pouvoir bouger dans la direction vers l'avant et vers l'arrière du véhicule et dans la direction vers la gauche et vers la droite du véhicule par rapport au support de compteur (80), le véhicule étant vu de dessus.

2. Véhicule selon la revendication 1, **caractérisé en ce que** le couvercle de compteur (90) est un élément distinct du support de carénage (30).

3. Véhicule selon la revendication 1 ou 2, **caractérisé en ce que** le support de compteur (80) est supporté par le dispositif de direction (70) et est fixé sur le support de carénage (30).

4. Véhicule selon l'une quelconque des revendications 1 à 3, **caractérisé en ce que** le support de compteur (80) est disposé sur une partie supérieure du support de carénage (30) et comprend une base qui s'étend dans une direction vers la gauche et vers la droite du véhicule vu de dessus, ainsi que des bras de fixation (83) qui sont disposés sur les parties gauche et droite de la base,
des premières parties d'enfichage (83B) qui s'étendent vers le bas, en vue latérale du véhicule, sont situées aux extrémités postérieures des bras de fixation (83),
le dispositif de direction (70) comporte des premières ouvertures (174B) dans lesquelles les premières parties d'enfichage (83B) peuvent être insérées et
le support de compteur (80) est supporté par le dispositif de direction (70) lorsque les premières parties d'enfichage (83B) du support de compteur (80) sont insérées par le dessus dans les premières ouvertures (174B).

5. Véhicule selon l'une quelconque des revendications 1 à 4, **caractérisé en ce que** le compteur (27) est pourvu d'une seconde partie d'enfichage (274) qui s'étend dans une direction vers l'avant du véhicule,
le carénage avant (23) est pourvu d'une seconde ouverture dans laquelle la seconde partie d'enfichage (274) peut être insérée et
la seconde partie d'enfichage (274) du compteur (27) est enfichée dans la seconde ouverture du carénage avant (23) de sorte que le compteur (27) et le couvercle de compteur (90) sont supportés par le carénage avant (23).

6. Véhicule selon l'une quelconque des revendications 1 à 5, **caractérisé par**
une source motrice (18) conçue pour générer une force d'entraînement destinée à propulser le véhicule ; et
un commutateur principal (28) qui est fixé sur le dispositif de direction (70) et conçu pour démarrer et stopper la source motrice (18),
le commutateur principal (28) possédant une face d'actionnement (28A) qui est conçue pour être actionnée pour démarrer et stopper la source motrice (18) et
le couvercle de compteur (90) comportant une ouverture qui expose la face d'actionnement (28A) du commutateur principal (28) et un cache de commutateur (95) qui couvre la zone entourant la face d'actionnement (28A).
